# EUROPEAN PATENT APPLICATION

(11) **EP 4 730 243 A1**
(43) Date of publication of application: **22.04.2026**
(21) Application number: 24383127.8
(22) Date of filing: 15.10.2024
(51) Int. Cl.: G06Q 10/20, G06T 7/00

(54) **COMPUTER IMPLEMENTED METHOD FOR ASSESSING THE SEVERITY OF DAMAGES CAUSED TO AN AIRCRAFT EMPLOYING AN ARTIFICIAL INTELLIGENCE MODEL AND COMPUTER IMPLEMENTED METHOD FOR TRAINING SAID ARTIFICIAL INTELLIGENCE MODEL**

(71) Applicant: Airbus Defence and Space, S.A.U., 28022 Madrid (ES)
(72) Inventor: SELTZER BERCOVICH, Rocio, 28022 Madrid (ES)
(74) Representative: Elzaburu S.L.P.

(57) **Abstract**

Computer implemented method for assessing the severity of damages caused to aircrafts, comprising the steps of: creating (S0) with an artificial intelligence model and a damage evaluation dataset, a map of maximum admissible damages, receiving (S2) an identification of a damaged aircraft component; receiving (S3) the defining parameters of the damage detected; selecting (S4) the spots of the map of maximum admissible damages which are closest to the damage detected; comparing (S5) the size of the detected damage with the maximum admissible damage sizes of the spots and providing (S6) as output an indication of the allowability or non-allowability of the damage, depending on the result of said comparison.

## Description

### Technical field

The present invention belongs to the technical field of aeronautical structural engineering, and more particularly to the area of structural damage assessment of civil and military aircrafts, such as airplanes and helicopters.

Thus, this invention refers to a computer implemented method for assessing the severity of damages caused to aircraft employing an artificial intelligence model, which is able to decide almost instantly (in a matter of seconds, at most), whether a damaged aircraft can fly without the need to carry out structural repairs, or not.

A second object of the present invention refers to a computer implemented method for training an artificial model for assessing the severity of damages caused to aircraft, which provides a more realistic allowability of damages, than those given in the repair manuals.

### Background of the invention

Many manufacturers contemplate in their structural repair manuals of civil and military aircrafts the so called "allowability of damages", that is, the maximum size and depths that a particular damage in an aircraft component can withstand, so that said aircraft can fly without the need for structural repairs

Unfortunately, the allowable damage limits given by the repair manuals usually are excessively conservative. The fact of these maximum values, which belong to the state of the art, not being well dimensioned (because of being excessively cautious), is problematic, since they can give rise to cases of false positives in which, it is concluded that is imperative to repair a damaged aircraft when it is not actually essential to do so, resulting in an unnecessary waste of time and other resources.

Thus, after detecting an out-of-range damage to the aircraft, the operator would contact the reparation service, which usually works uninterruptedly. For example, in the case of Airbus, the reparation service should give preliminary answers to emergencies within 4 hours. This implies that structural engineers which form part of the reparation staff would not have enough time to perform analysis from scratch, so they should base their decision on existing documentation and simple calculations, which is -again- highly conservative. A definite answer should be given within 48 hours. On the other hand, in those cases where the solution can wait, the incidence is solved by the repairs group, who performs detailed analysis of the damage, which takes an average of 8 hours.

On the other hand, it would be necessary to reduce waiting times also in those cases in which it is essential to structurally repair the damaged component of the aircraft, for example by allowing said structural reparation tasks to begin as soon as possible without unnecessary delays.

The reason for this is that unnecessary flight delays result in significant economic losses. In fact, it is estimated that each delayed day costs an average of 20 k€ for military aircrafts and 80 - 300 k€ for commercial aircrafts. Moreover, it is also important to point out that aircraft on ground reparation services are given by engineers with high time constrains. Therefore, this type of work is prone to human errors and variance in decisions.

In view of the above, in the technical sector of the aeronautical structural engineering, still there is a need to reduce the time for carrying out assessments of the severity of damages caused to aircraft, while maintaining the validity of the assessments made. On the other hand, it is also important to fine tune the characteristic parameters of the availability of damages, to reduce the number of false positives, errors and variance in decisions, as well as improving the consistency of the assessments made.

### Summary of the invention

With the aim of providing a solution to the abovementioned problems, a first object of the present invention refers to a computer implemented method for assessing the severity of damages caused to aircrafts, using an artificial intelligence (Al) model, characterized in that the artificial intelligence model comprises a damage evaluation dataset, each record of said dataset including, at least, the following information:
- identification of an aircraft component including, at least, one reference damage;
- defining parameters of the reference damage, the defining parameters comprising information about the size and location of the reference damage; and
- an indication of the severity of the reference damage for a predefined group of failure modes of the aircraft component, the indication of the severity of the reference damage having two possible values, admissible or not admissible;
and in that said method comprises the steps of:
a) using the damage evaluation dataset for creating with the artificial intelligence (Al) model, a map of maximum admissible damages, said map comprising a plurality of spots, each spot comprising information of the maximum admissible damage size at a specific location on an aircraft component for a failure mode thereof;
b) receiving, an identification of an aircraft component including at least one detected damage;
c) receiving, the defining parameters of the detected damage, said defining parameters comprising information about the size and location of the detected damage on the aircraft component identified in the step above;
d) selecting the spots of the map of maximum admissible damages which are closest to the specific location of the damage detected;
e) comparing the size of the detected damage with the maximum admissible damage sizes of the spots selected in the previous step;
f) providing an indication of the severity of the damage detected, the severity of the damage being allowable in those cases which the size of the detected damage is lower or equal than the maximum admissible damage size of all the spots and, conversely, the severity of the damage being not- allowable in those cases in which the size of the detected damage is higher than the maximum admissible damage size of at least one of the spots.

The abovementioned method of assessing the severity of damages caused to aircrafts according to the present invention, is able to provide an immediate response to the operator about the allowability of a certain damage in an aircraft component, that is, if the damaged aircraft can fly without the need for structural repairs, or not. Moreover, in spite all calculations made, during the intermediate steps of this method, the final output is merely binary and straightforward: an indicator classifying the damage detected as an "allowable damage" or alternatively, as a "not allowable damage", so it can be clearly interpreted by any person even though he/she does not have technical knowledge.

The use of the present method also results, in turn, in an increase of fleet availability, since the waiting times until the damage assessment is carried out substantially disappear. Other advantages of the method of the invention are its scalability and the fact that responses on the severity of the damage detected provided have total consistency: that is equal outcome is provided for any equal damage configuration detected. Last but not least, in the method according to the invention, risk management (i.e., assessing the severity of damages) is evaluated by a team, rather than performed by a single person during emergency calls.

Throughout the present description, it should be understood that the expression "allowable damage" in a component of an aircraft, means that the severity of said damage is low enough to allow the corresponding damaged aircraft to fly without the need for structural repairs. Conversely, the expression "not-allowable damage" component, means that the severity of the damage caused to the component is of sufficient magnitude to prevent the aircraft from flying until structural repair tasks have been carried out or the component is replaced. Similarly, a "failure mode" of an aircraft component makes reference to one of the ways in which the aircraft component fails to perform one of its intended functions. Examples of possible failure modes are: attachment failure, buckling failure, yielding failure, shear strength failure and axial strain failure.

Preferably, in the present invention, the defining parameters of the reference damage, comprise, at least, the following:
- coordinates of the center of gravity of the reference damage;
- size of the reference damage; and
- depth of the reference damage;

Similarly, the defining parameters of the damage detected preferably comprise the following:
- coordinates of the center of gravity of the damage detected;
- size of the damage detected; and
- depth of the damage detected.

On the other hand, the method of assessing the severity of damages caused to aircrafts according to the present invention, preferably comprises the following initial steps:
- identifying an aircraft component which includes at least one detected damage, by means of an image acquisition unit that takes images of the aircraft;
- analyzing those images taken by the image acquisition unit corresponding to the aircraft component which includes the detected damage and quantifying from said images, at least one of the defining parameters of said detected damage.

A second object of the present invention refers to a computer readable medium characterized in that it comprises instructions that, when executed in a computer, cause the computer to carry out any of the computer implemented methods for assessing the severity of damages caused to aircrafts, mentioned above, and which form part of the first object of the invention.

A third object of the present invention refers to a computer implemented method for training an artificial intelligence model, employed in a method for assessing the severity of damages caused to aircrafts, which forms part of the first object of the present invention. Said method for training the artificial intelligence model being characterized in that comprises the steps of:
i) choosing an aircraft component;
ii) providing the defining parameters of one reference damage to the aircraft component, said defining parameters including information about the size and location of the reference damage;
iii) calculating, using the above reference damage defining parameters, the reserve factor associated at least to one failure mode of the component caused by the damage, the reserve factor being calculated as the ratio between the strength of the aircraft component and the load applied to the aircraft component;
iv) repeating steps i) to iii) for a plurality of reference damages extending through the aircraft component;
v) classifying a first set of the reference damages as test dataset and using said test dataset as input data (i.e., as damage evaluation dataset) for testing the artificial intelligence model, said testing comprising the following steps:
vi) comparing the reserve factor of each reference damage belonging to the test dataset, with a predefined minimum admissible reserve factor; and
vii) considering the severity of the reference damage detected as allowable, in those cases in which the calculated reserve factor is bigger than or equal to said minimum admissible reserve factor and considering the severity of the reference damage detected as not-allowable, in those cases in which the calculated reserve factor lower than the minimum admissible reserve factor.

In a preferred embodiment, the classification step of the training method according to the invention also comprises classifying a second set of the reference damages as tune dataset, the tune dataset undergoing a tuning stage, and classifying a third set of the reference damages as training dataset undergoing a training stage, comprises the following additional steps; the method also comprising the following additional steps:
- stratifying the reference damages obtained in the calculation step into a predefined number of intervals, depending on the value of the reserve factor obtained; and
- employing the results of the tuning stage or the training stage for correcting the minimum admissible reserve factor used for assessing the severity of the reference damage belonging to the test dataset.

Preferably, the test dataset, the tuning dataset and the training dataset all have the same proportion of reference damages in each of the intervals.

The distribution of the reference damages between the three datasets (i.e., test dataset, tune dataset and training dataset) can be done randomly, although respecting the proportion of results in each of the intervals.

On the other hand, in all embodiments of the invention, the calculation of the reserve factor from the reference damage defining parameters associated at least to one failure mode of the component caused by the damage, is preferably carried out using, at least, one of the following methods: finite element modelling (FEM), boundary element methods (BEM), finite difference methods (FDM), meshless methods, analytical equations and experimental tests.

Preferably, the training stage includes a step wherein the artificial intelligence model subjects the training dataset to a machine learning (ML) type of regression. Examples of machine learning regression model types employed in the context of the present invention are eXtreme Gradient Boosting (commercial name), also known as XGBoost (commercial name), Random Forest Regressor (commercial name), SVR (commercial name) and LightGBM Regressor (commercial name).

Preferably, the tuning stage includes the following steps:
- calculating, for each failure mode of the component, the reserve factor of each reference damage belonging to the tune dataset, the reserve factor being calculated as the ratio between the strength of the aircraft component and the load applied to the aircraft component;
- setting, for each failure mode of the component caused by the damage, a provisional threshold of the minimum admissible reserve factor as 1;
- provisionally classifying the severity of the damage detected as allowable, in those cases in which the calculated reserve factor is bigger than or equal to said provisional threshold, and provisionally classifying the severity of the damage detected as not-allowable, in those cases in which the calculated reserve factor is equal to or lower than the provisional threshold;
- performing a fine-tuning step of the threshold of the minimum admissible reserve factor, for each failure mode of the component, based on a precision-recall curve, and
- correcting the value of the minimum admissible reserve factor used for assessing the severity of the reference damage belonging to the test dataset according to the result of said fine-tuning step.

Thanks to the tuning stage described in the above paragraph, the computer implemented method for training an artificial intelligence model according to the present invention is able to fine tune the threshold of the minimum admissible reserve factor, which makes possible for the artificial intelligence model to obtain a more accurate damage evaluation dataset. This, in turn, allows the artificial intelligence model to provide more accurate assessments of the severity of damage to aircraft components, preventing the occurrence of false negatives. This is an advantage over prior art damage severity assessing method which usually trade-off detecting positives in detriment of detecting negatives.

In the computer implemented method for training an artificial intelligence model according to the present invention, the defining parameters of the reference damage to the aircraft component preferably include following:
- coordinates of the center of gravity of the reference damage;
- size of the reference damage; and
- depth of the reference damage.

A fourth object of the present invention refers to a computer readable medium characterized in that it comprises instructions that, when executed in a computer, cause the computer to carry out the method for training an artificial intelligence model mentioned above, and which form part of the third object of the invention.

### Brief description of the drawings

As a means for better understanding at least one embodiment of the present invention, the following set of drawings is introduced by way of schematic illustration and in a non-limitative manner.
Figure 1: Shows a flow diagram of one possible embodiment of a computer implemented method for assessing the severity of damages caused to aircrafts, according to the present invention.
Figure 2: Shows a flow diagram of one possible embodiment of a computer implemented method for training an artificial intelligence model, according to the present invention.

### Detailed description of the invention

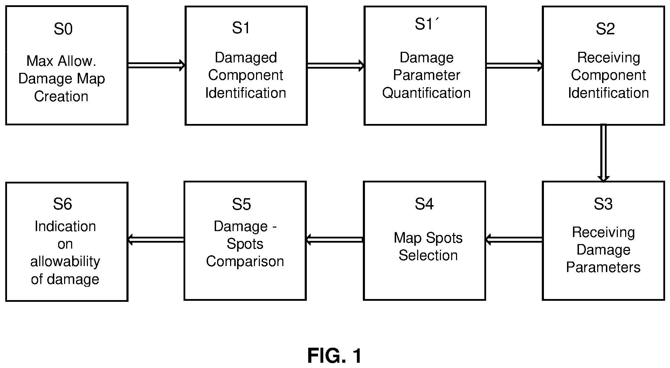

Figure 1 schematically depicts one preferred embodiment of the computer implemented method for assessing the severity of damages caused to aircrafts, according to the present invention.

The method shown in Fig.1 uses an artificial intelligence model, including both logical storage media and logical processing media. In this case, a damage evaluation dataset resulting from a previous training operation is stored in the logical storage media, while the logical processing media, comprise at least one central processing unit, capable of executing instructions. In addition, auxiliary logical processing media are used for performing some of the steps of the present invention, as explained below. Examples of said auxiliary logical processing media are personal computers, laptops, tablets, smartphones and smartwatches.

Each record of the dataset includes the following information: identification of an aircraft component including one reference damage, defining parameters of the reference damage (i.e., coordinates of the center of gravity of the reference damage; size of the reference damage; and depth of the reference damage). In this case, the size of the reference damages is given as a diameter corresponding to the circle wherein said reference damage is circumscribed.

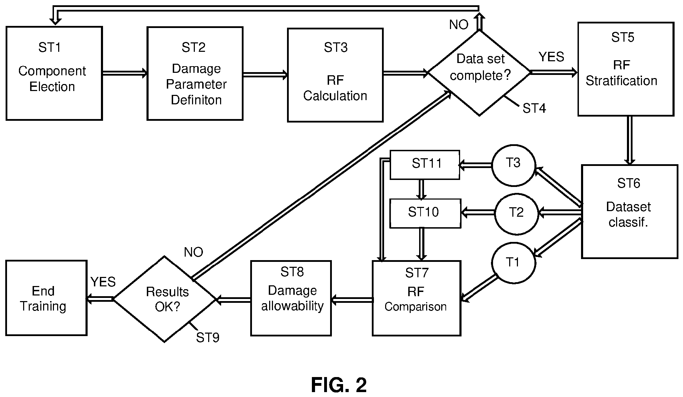

In the first step of the method shown in Fig. 1, step S0, the artificial intelligence (Al) model uses the damage evaluation dataset for creating a map of maximum admissible damages following a process similar to the training method shown in Fig. 2. That is, the reserve factor of each damage in the evaluation dataset is calculated and then, the severity of each damage is determined by comparing the value of the reserve factor obtained with a predefined minimum admissible reserve factor.

The map of maximum admissible damages is formed from the combination of a plurality of spots (or values in a matrix), each spot comprising information of the maximum admissible damage size at a specific location on an aircraft component for a failure mode thereof.

Then, in this particular embodiment of the invention, in step S1, an image acquisition unit in the form of a digital video camera mounted on a drone is used for identifying at least one damaged aircraft component. This arrangement is advantageous, since it allows the drone to fly over the aircraft, facilitating inspection tasks.

Image acquisition units, used in the context of the present invention can operate in the visible region of the spectrum, in the infrared region of the spectrum, in the ultraviolet region of the spectrum, or simultaneously operate in several of said sections of the electromagnetic spectrum.

The following step of the method according to the invention represented in Fig. 1 is step S1', which consists in analyzing those images corresponding to the aircraft component which include the detected damages and quantifying from said images, the defining parameters of said detected damage.

Even though the method for assessing the severity of damages shown Figure 1 includes step S1 and S1' described above, it is important to note that said steps are optional, since the present invention also contemplates other more general embodiments, in which steps S0 and S0' are omitted. Thus, the present invention also contemplates the possibility of manually carrying out the identification of damaged aircraft components and manually quantifying said the defining parameters of said detected damage.

On the other hand, the method shown in Fig. 1 preferably comprises an optional step, compatible with all embodiments possible of the invention, of cleaning the region surrounding the detected damage, to check the maximum depth of the damages, which is specially convenient in aircraft components made from composites.

In step S2 of Fig. 1, the logical processing media, automatically receives, the identification of the aircraft component which includes at least one detected damage. Similarly, the following step S3 shown in Fig. 1 consists in receiving, as input of the artificial intelligence model, the defining parameters of the detected damage, which in this particular case is also performed automatically.

Nevertheless, other embodiments of the invention also contemplate the possibility of performing steps S2 and S3 in a non-automated way, that is, manually providing the identification of the damaged aircraft component and the defining parameters of the detected damage as inputs for the artificial intelligence model, for example, through a user interface.

Step S4, is subsequently performed. This step consists in selecting among all the spots which together form the map of maximum admissible damages, those which are closest to the specific location of the damage detected and is performed by the auxiliary logical processing media.

After selecting the most similar record of the damage evaluation dataset, the auxiliary logical processing media are used for comparing, in step S5, the size of the detected damage with the maximum admissible damage sizes of the spots selected in the previous step.

Finally, the computer implemented of the invention, method shown in Fig 1, concludes with the final step S6, in which an indication of the severity of the damage detected is provided by the auxiliary logical processing media. According to the present invention, the severity of the damage is considered as allowable, in those cases in which the size of the detected damage is lower or equal than the maximum admissible damage size of all the spots selected in step S4. Conversely, the severity of the damage is considered as not-allowable, in those cases in which the size of the detected damage is higher than the maximum admissible damage size of at least one of the spots. In one embodiment of the invention, the resulting indication of the severity of the damage detected is shown on a display screen.

Figure 2 shows a schematic view of one possible embodiment of a computer implemented method for training an artificial intelligence model, according to the present invention.

The first step of the training method shown in Fig. 2, is step ST1, which consists in choosing a particular aircraft component among all the possible components which make up the aircraft.

Next, step ST2 takes place, which consists in providing the defining parameters of one reference damage, to the aircraft component selected in the previous step, ST1. Defining parameters are in the example shown in Fig. 2 as follows: coordinates of the center of gravity of the reference damage, diameter of the reference damage; and depth of the reference damage.

In step ST3, finite element modelling is used for calculating, from the defining parameters of the reference damage provided in step ST2, the reserve factor, RF, associated to one failure mode of the component caused by the reference damage. The reserve factor RF is calculated, also in this case, as the ratio between the strength of the aircraft component and the load applied to the aircraft component, as a result of the reference damage. FEM solvers such as Nastran (commercial name), Abaqus (commercial name) and Ansys (commercial name) could also be used in this case.

Nevertheless, the present invention also contemplates the possibility of calculating the reserve factor from the reference damage defining parameters using different methods, such as boundary element methods (BEM), finite difference methods (FDM), meshless methods, analytical equations and experimental tests.

In order to effectively train the artificial intelligence model, large amounts of data are required. Consequently, the next step of the method shown in Fig. 2, namely step ST4, consists in repeating previous steps (ST1-ST3) for a plurality of reference damages which extend through the aircraft component selected in step ST1.

Preferably, the selection of the plurality of reference damages is performed randomly or alternatively, with some strategic bias. Strategic bias can be based, for example, in choosing reference damages which are located throughout the entire extension of the corresponding aircraft component, which include all boundaries of the aircraft component and/or which include zones with singularities / discontinuities. Active learning_methods can be used, such as uncertainty sampling, query by committee and expected error reduction, in all embodiments of the invention for minimizing the number of reference damages required for correctly training the artificial intelligence model.

In step ST5 the reference damages are the stratified into a predefined number of intervals, depending on the value of the reserve factor, previously obtained in the calculation step (ST3). Nevertheless, this particular step is optional and, therefore, is not necessarily present in each embodiment of the training method according to the invention.

Next, in the classifying step ST6 the reference damages are divided into three different datasets: a test dataset T1, a tune dataset T2 and training dataset T3. Each dataset is subsequently subjected to a different treatment.

The distribution of the reference damages between the three datasets is done, in this particular case, semi-randomly in such a way that the test dataset T1, the tuning dataset T2 and the training dataset T3 all have the same proportion of reference damages in each of the intervals.

The test dataset T1 is used as input data for testing the artificial intelligence model and undergoes the following subsequent steps: in step ST7 the reserve factor of each reference damage belonging to the test dataset, is compared with a predefined minimum admissible reserve factor. As a result of said comparison, in step ST8, the assessment of the severity of the damages belonging to the test dataset T1 is made. Thus, the severity of said reference damages is considered as allowable, in those cases in which the calculated reserve factor is bigger than or equal to said minimum admissible reserve factor. Conversely, the severity of the damages is considered as not-allowable, in those cases in which the calculated reserve factor lower than the minimum admissible reserve factor.

In step, ST9, the validity of the damage severity assessment made in the previous stage is checked. To that, end the specificity (i.e., the ratio of allowable damages correctly identified), and recall (the ratio of non-allowable damages correctly identified) are calculated and compared with predefined target values (in this case specificity was set to 50% and recall was set to 100%). If any of the values obtained is below these target values, then the training method returns to stage ST4 to generate more reference damages that allow improving the precision of the damage assessment. On the contrary, if the specificity and the recall targets values are met, the training method ends.

In turn, the tuning dataset T2 undergoes a tuning stage ST1 0, includes the following steps:
- calculating, for each failure mode of the component, the reserve factor of each reference damage belonging to the tune dataset T2, the reserve factor being calculated as the ratio between the strength of the aircraft component and the load applied to the aircraft component;
- setting, for each failure mode of the component caused by the damage, a provisional threshold of the minimum admissible reserve factor as 1;
- provisionally classifying the severity of the damage detected as allowable, in those cases in which the calculated reserve factor is bigger than said provisional threshold, and provisionally classifying the severity of the damage detected as not-allowable, in those cases in which the calculated reserve factor is equal to or lower than the provisional threshold;
- performing a fine-tuning step of the threshold of the minimum admissible reserve factor, for each failure mode of the component, based on a precision-recall curve; and
- correcting the value of the minimum admissible reserve factor, used in step ST8 for assessing the severity of the reference damage belonging to the test dataset T1, according to the result of said fine-tuning step.

In this particular case, the precision-recall curve is built using the tune dataset T2 and also, using the prediction of the tune dataset T2 after undergoing a training stage ST11, which will be described in more detail below. This interaction between stage ST10 and stage ST11 is compatible with all embodiments of the training method of the invention including both stages.

Finally, the training data set T3 undergoes a training stage ST11, which in this particular case includes a step in which the artificial intelligence model subjects the training dataset T3 to a machine learning type of regression. As shown by the corresponding line in the flow diagram of Fig. 2, the result of this regression is employed in stage ST10 for correcting the minimum admissible reserve factor, which is used, in turn, in step ST8 for assessing the severity of the reference damages belonging to the test dataset T1.

## Claims

1. Computer implemented method for assessing the severity of damages caused to aircrafts, using an artificial intelligence model, the method being **characterized in that** the artificial intelligence model comprises a damage evaluation dataset, each record of the dataset including, at least, the following information:
- identification of an aircraft component including, at least, one reference damage;
- defining parameters of the reference damage, the defining parameters comprising information about the size and location of the reference damage;
- an indication of the severity of the reference damage for a predefined group of failure modes of the aircraft component, the indication of the severity of the reference damage having two possible values, admissible or not admissible;
and **in that** said method comprises the steps of:
a) using (S0) the damage evaluation dataset for creating with the artificial intelligence model, a map of maximum admissible damages, said map comprising a plurality of spots, each spot comprising information of the maximum admissible damage size at a specific location on an aircraft component for a failure mode thereof;
b) receiving (S2) an identification of an aircraft component including at least one detected damage;
c) receiving (S3) defining parameters of the detected damage, said defining parameters comprising information about the size and location of the detected damage on the aircraft component identified in the step above;
d) selecting (S4) the spots of the map of maximum admissible damages which are closest to the specific location of the damage detected;
e) comparing (S5), the size of the detected damage with the maximum admissible damage sizes of the spots selected in the previous step; and
f) providing (S6) an indication of the severity of the damage detected, the severity of the damage being allowable in those cases which the size of the detected damage is lower or equal than the maximum admissible damage size of all the spots, and, conversely, the severity of the damage being not-allowable in those cases in which the size of the detected damage is higher than the maximum admissible damage size of at least one of the spots.

2. Computer implemented method for assessing the severity of damages caused to aircrafts, according to according to claim 1, wherein the defining parameters of the reference damage comprise, at least:
- coordinates of the center of gravity of the reference damage;
- size of the reference damage; and
- depth of the reference damage;
and wherein the defining parameters of the damage detected comprise, at least:
- coordinates of the center of gravity of the damage detected;
- size of the damage detected; and
- depth of the reference damage.

3. Computer implemented method for assessing the severity of damages caused to aircrafts, according to any of the previous claims, comprising the following initial steps:
- identifying (S1) an aircraft component which includes at least one detected damage, by means of an image acquisition unit that takes images of the aircraft;
- analyzing (S1') those images taken by the image acquisition unit corresponding to the aircraft component which includes the detected damage and quantifying from said images, at least one of the defining parameters of said detected damage.

4. Computer readable medium, **characterized in that** it comprises instructions that, when executed in a computer, cause the computer to carry out the method for assessing the severity of damages caused to aircrafts, according to any of claims 1 to 3.

5. Computer implemented method for training an artificial intelligence model, used in a method for assessing the severity of damages caused to aircrafts, according to any of claims 1 to 3, the method being **characterized in that** it comprises the steps of:
i) choosing (ST1), an aircraft component;
ii) providing (ST2), defining parameters of one reference damage to the aircraft component, said defining parameters including information about the size and location of the reference damage;
iii) calculating (ST3), using the above reference damage defining parameters, the reserve factor (RF) associated at least to one failure mode of the component caused by the damage, the reserve factor being calculated as the ratio between the strength of the aircraft component and the load applied to the aircraft component;
iv) repeating (ST4), previous steps (ST1-ST3) for a plurality of reference damages extending through the aircraft component;
v) classifying (ST6) a first set of the reference damages as test dataset and using said test dataset (T1) as input data for testing the artificial intelligence model, said testing comprising the following steps:
vi) comparing (ST7) the reserve factor of each reference damage belonging to the test dataset, with a predefined minimum admissible reserve factor; and
vii) considering (ST8) the severity of the reference damage detected as allowable, in those cases in which the calculated reserve factor is bigger than or equal to said minimum admissible reserve factor and considering the severity of the reference damage detected as not-allowable, in those cases in which the calculated reserve factor lower than the minimum admissible reserve factor.

6. Computer implemented method for training an artificial intelligence model, according to claim 5, wherein the step of calculating (ST3) the reserve factor from the reference damage defining parameters is carried out using, at least, one of the following methods: finite element modelling, boundary element methods, finite difference methods, meshless methods, analytical equations and experimental tests.

7. Computer implemented method for training an artificial intelligence model, according to any of claims 5 and 6, wherein the classification step (ST6) also comprises classifying a second set of the reference damages as tune dataset (T2), the tune dataset (T2) undergoing a tuning stage (ST10), and classifying a third set of the reference damages as training dataset (T3), the training dataset (T3) undergoing a training stage (ST11), the method further comprising the following additional steps:
- stratifying (ST5) the reference damages into a predefined number of intervals, depending on the value of the reserve factor obtained in the calculation step (ST3); and
- employing the results of the tuning stage (ST10) and/or the results of the training stage (ST11) for correcting the minimum admissible reserve factor used for assessing the severity of the reference damages belonging to the test dataset (T1).

8. Computer implemented method for training an artificial intelligence model, according to claim 7, wherein the test dataset (T1), the tune dataset (T2), and the training dataset (T3), have the same proportion of reference damages in each of the intervals.

9. Computer implemented method for training an artificial intelligence model, according to any of claims 7 and 8, wherein training stage (ST11) includes a step in which the artificial intelligence model subjects the training dataset (T3) to a machine learning type of regression.

10. Computer implemented method for training an artificial intelligence model, according to any of claims 5 to 9, wherein the defining parameters of the reference damage to the aircraft component preferably comprise:
- coordinates of the center of gravity of the reference damage;
- size of the reference damage; and
- depth of the reference damage;

11. Computer implemented method for training an artificial intelligence model, according to any of claims 7 to 10, wherein the tuning stage (ST10), includes the following steps:
- calculating, for each failure mode of the component, the reserve factor of each reference damage belonging to the tune dataset (T2), the reserve factor being calculated as the ratio between the strength of the aircraft component and the load applied to the aircraft component;
- setting, for each failure mode of the component caused by the damage, a provisional threshold of the minimum admissible reserve factor as 1;
- provisionally classifying the severity of the damage detected as allowable, in those cases in which the calculated reserve factor is bigger than said provisional threshold, and provisionally classifying the severity of the damage detected as not-allowable, in those cases in which the calculated reserve factor is equal to or lower than the provisional threshold;
- performing a fine-tuning step of the threshold of the minimum admissible reserve factor, for each failure mode of the component, based on a precision-recall curve; and
- correcting the value of the minimum admissible reserve factor used for assessing the severity of the reference damage belonging to the test dataset according to the result of said fine-tuning step.

12. Computer readable medium, **characterized in that** it comprises instructions that, when executed in a computer, cause the computer to carry out the method for training an artificial intelligence model according to any of claims 5 to 11.
